# EUROPÄISCHE PATENTSCHRIFT

(11) **EP 0 366 133 B1**
(45) Veröffentlichungstag und Bekanntmachung des Hinweises auf die Patenterteilung: **16.03.1994**
(21) Anmeldenummer: 89119882.2
(22) Anmeldetag: 26.10.1989
(51) Int. Cl.: C08J 3/03, C08L 83/04, C08J 3/07

(54) **Verfahren zur Herstellung wässriger Emulsionen von hochmolekularen Organopolysiloxanen**
Process for the preparation of aqueous emulsions of high molecular weight organopolysiloxanes
Procédé de préparation d'émulsions aqueuses d'organopolysiloxanes à haut poids moléculaire

(30) Priorität: 28.10.1988 DE 3836830
(43) Veröffentlichungstag der Anmeldung: 02.05.1990
(73) Patentinhaber: WACKER-CHEMIE GMBH, D-81737 München (DE)
(72) Erfinder: Demlehner, Ulrich, Dr. Dipl.-Chem., D-8261 Kastl (DE); Deubzer, Bernward, Dr. Dipl.-Chem., D-8263 Burghausen (DE); Mayer, Hans, Dr. Dipl.-Chem., D-8263 Burghausen (DE); Pilzweger, Erich, D-8341 Julbach (DE)

(56) Entgegenhaltungen:
- DE-A- 3 323 909
- US-A- 4 529 758
- US-A- 4 824 877

## Beschreibung

Die vorliegende Erfindung betrifft ein Verfahren zur Herstellung wäßriger Emulsionen von bei Raumtemperatur festen hochmolekularen Organopolysiloxanen ohne Verwendung organischer Lösungsmittel.

Maßnahmen zum Umweltschutz zwingen in zunehmenden Maße zur Vermeidung organischer Lösungsmittel in chemischen Zubereitungen. Demzufolge finden immer mehr wäßrige Systeme Verwendung. Außerdem sind organische Lösungsmittel oftmals aufgrund ihrer toxikologischen Eigenschaften und ihrer Brandgefahr unerwünscht.

Die Herstellung wäßriger Emulsionen von Organopolysiloxanen ist an sich vielfach bekannt. In EP-A-157 323 (ausgegeben 9. Oktober 1985, W. Grape et al., Bayer AG), in US-A 4 582 874 (ausgegeben 15. April 1986, W. Grape et al., Bayer AG), in GB-B-2 085 903 (ausgegeben 19. Juni 1985, F. Traver, General Electric Co.) und in US-A-4 552 910 (ausgegeben 12. November 1985, B. Deubzer et al., Wacker-Chemie GmbH) werden wäßrige Emulsionen von Organopolysiloxanen beschrieben, wobei das in flüssigem Zustand bzw. gelöst in einem organischen Solvens vorliegende Organopolysiloxan unter Zusatz geeigneter Emulgatoren in Wasser emulgiert wird. Die Herstellung solcher Emulsionen stößt jedoch auf Schwierigkeiten, wenn hochmolekulare Organopolysiloxane, die häufig in kristalliner oder zumindest glasartiger Form anfallen, in Wasser ohne Zuhilfenahme organischer Lösungsmittel emulgiert werden sollen. In diesem Fall kann der Emulgierschritt nicht mehr mit den üblichen, dem Stand der Technik entsprechenden Geräten, wie etwa Stativ-Dissolver, Turrax usw. erfolgen. In CA-A 12 05 937 (ausgegeben 10. Juni 1986, F. Traver, General Electric Co.) ist die Herstellung wäßriger Emulsionen von Organopolysiloxanharzen beschrieben. Der Emulgierschritt wird durch Mahlen in einer Kolloidmühle durchgeführt, so daß das erhaltene wäßrige System streng genommen als Organopolysiloxanharz-Suspension bezeichnet werden müßte.

Es bestand die Aufgabe, ein Verfahren bereitzustellen, das es erlaubt, lagerbeständige wäßrige Emulsionen von bei Raumtemperatur festen hochmolekularen Organopolysiloxanen ohne Verwendung organischer Lösungsmittel herzustellen, wobei die chemische Beschaffenheit der einzelnen Komponenten bzw. Additive sowie deren Gewichtsanteile in der Emulsion in weitem Rahmen variiert werden können. Diese Aufgabe wird durch die Erfindung gelöst.

Gegenstand der Erfindung ist ein Verfahren zur Herstellung wäßriger Emulsionen von bei Raumtemperatur festen hochmolekularen Organopolysiloxanen, dadurch gekennzeichnet, daß das bei Raumtemperatur feste hochmolekulare Organopolysiloxan in einem bei Raumtemperatur flüssigen niedermolekularen Organo(poly)siloxan gelöst und diese Lösung mit Wasser unter Zusatz eines Emulgators und gegebenenfalls üblichen Additiven emulgiert wird.

Als bei Raumtemperatur festes hochmolekulares Organopolysiloxan wird bei dem erfindungsgemäßen Verfahren vorzugsweise solches aus Einheiten der allgemeinen Formel eingesetzt 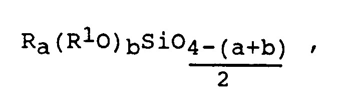
wobei R gleiche oder verschiedene, einwertige Kohlenwasserstoffreste mit 1 bis 14 Kohlenstoffatom(en) je Rest, die gegen Wasser inerte Substituenten aufweisen können, bedeutet, R¹ gleich oder verschieden sein kann, ein Wasserstoffatom oder einen Alkylrest mit 1 bis 4 Kohlenstoffatom(en) je Rest bedeutet, a 0,1,2 oder 3, durchschnittlich 0,75 bis 1,5, durchschnittlich vorzugsweise 0,9 bis 1,1, und b 0, 1, 2 oder 3, durchschnittlich 0,0 bis 1,1, durchschnittlich vorzugsweise 0,01 bis 0,07, ist, mit der Maßgabe, daß diese Organopolysiloxane ein Molekulargewicht vorzugsweise von mindestens 4000 g/mol besitzen.

Bei dem bei dem erfindungsgemäßen Verfahren eingesetzten, hochmolekularen Organopolysiloxan kann es sich um eine einzelne Art von hochmolekularem Organopolysiloxan handeln. Es kann sich aber auch um ein Gemisch aus mindestens zwei verschiedenen Arten derartiger hochmolekularer Organopolysiloxane handeln.

Beispiele für Reste R sind Alkylreste, wie der Methyl-, Ethyl- und Propylrest, Alkenylreste, wie der Vinylrest und Arylreste, wie der Phenylrest.

Beispiel für einen substituierten Kohlenwasserstoffrest R ist der 3,3,3-Trifluorpropylrest.

Bevorzugte Reste R sind Methyl-, Phenyl- und Propylreste.

Beispiele für Reste R¹ sind Methyl-, Ethyl- und Propylreste, wobei die Ethylreste bevorzugt sind.

Die Herstellung der erfindungsgemäß eingesetzten, bei Raumtemperatur festen hochmolekularen Organopolysiloxane ist bekannt und z.B. in GB-A-6 85 173 (ausgegeben 31. Dezember 1951, Dow Corning Limited), US-A-28 42 521 (ausgegeben 8. Juli 1958, S. Nietsche et al., Wacker-Chemie GmbH), FR-A-14 75 709 (ausgegeben 7. April 1967, General Electric Company), US-A-36 68 180 (ausgegeben 6. Juni 1972, J.L. Brennan et al., Stauffer-Wacker-Silicone Corporation), US-A-37 92 071 (ausgegeben 12. Februar 1974, S. Nietsche et al., Wacker-Chemie GmbH), US-A-38 46 358 (ausgegeben 5. November 1974, G.F. Roedel, General Electric Company), und US-A-42 98 753 (ausgegeben 3. November 1981, A. Schinabeck et al., Wacker-Chemie GmbH) beschrieben.

Bevorzugt werden bei dem erfindungsgemäßen Verfahren als hochmolekulare Organopolysiloxane solche der Formel CH₃SiO_{1,97}(OC₂H₅)_{0,06} und einem Molekulargewicht von mindestens 4000 g/mol eingesetzt.

Bei den erfindungsgemäß eingesetzten, niedermolekularen Organo(poly)siloxanen handelt es sich vorzugsweise um solche aus Einheiten der allgemeinen Formel 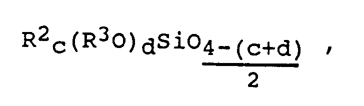
wobei R² gleiche oder verschiedene, einwertige Kohlenwasserstoffreste mit 1 bis 14 Kohlenstoffatom(en) je Rest, die gegen Wasser inerte Substituenten aufweisen können, bedeutet, R³ gleich oder verschieden sein kann, ein Wasserstoffatom oder einen Alkylrest mit 1 bis 4 Kohlenstoffatom(en) je Rest bedeutet, c 0, 1, 2 oder 3, durchschnittlich 0,0 bis 3,9, durchschnittlich vorzugsweise 0,9 bis 1,1, und d 0, 1, 2 oder 3, durchschnittlich 0,2 bis 3,9, durchschnittlich vorzugsweise 0,8 bis 1,5, ist, mit der Maßgabe, daß diese Organo(poly)siloxane vorzugsweise 1 bis 20 Si-Atome pro Molekül und eine Viskosität vorzugsweise von 0,5 bis 100 mPa·s bei 25°C, bevorzugt von 2 bis 20 mPa·s bei 25°C besitzen.

Beispiele für Reste R² sind Alkylreste, wie der Methyl- und Ethylrest, wobei Methylreste bevorzugt sind.

Beispiel für einen substituierten Kohlenwasserstoffrest R² ist der 3,3,3-Trifluorpropylrest.

Beispiele für Reste R³ sind Methyl- und Ethylreste, wobei Ethylreste bevorzugt sind.

Die erfindungsgemäß eingesetzten, niedermolekularen Organo(poly)siloxane können in der gleichen Weise hergestellt werden wie die oben beschriebenen hochmolekularen Organopolysiloxane.

Bevorzugt werden bei dem erfindungsgemäßen Verfahren niedermolekulare Organo(poly)siloxane der Formel CH₃SiO_{1,1}(OC₂H₅)_{0,8} mit einer Viskosität von 20 mPa·s bei 25°C eingesetzt.

Die nach dem erfindungsgemäßen Verfahren hergestellten, wäßrigen Emulsionen von hochmolekularen Organopolysiloxanen enthalten niedermolekulares Organo(poly)siloxan vorzugsweise in Mengen von 1-200 Gew.-%, insbesondere 20-50 Gew.-%, besonders bevorzugt 35-45 Gew.-%, jeweils bezogen auf das Gesamtgewicht an eingesetztem, hochmolekularen Organopolysiloxan.

Bei dem erfindungsgemäßen Verfahren können als Emulgatoren alle bisher bekannten, ionischen und nicht-ionischen Emulgatoren sowohl einzeln, als auch in Mischungen verschiedener Emulgatoren eingesetzt werden, mit denen auch bisher beständige wäßrige Emulsionen von Organopolysiloxanen hergestellt werden konnten. Es können auch solche Emulgiermittel, wie sie in DE-C-36 13 384 bzw. in der entsprechenden US-A-4 757 106 beschrieben sind, eingesetzt werden. Vorzugsweise werden nicht-ionische Emulgatoren eingesetzt. Besonders bevorzugt werden dabei Emulgatoren auf Polyethylenglycolbasis, wie Isotridecylalkoholpolyethylenoxid-ether mit im Mittel 16 Ethylenoxideinheiten eingesetzt.

Die nach dem erfindungsgemäßen Verfahren hergestellten, wäßrigen Emulsionen von hochmolekularen Organopolysiloxanen enthalten Emulgator in Mengen von vorzugsweise 0,1 - 50 Gew.-% jeweils bezogen auf das Gesamtgewicht an eingesetztem, hochmolekularen Organopolysiloxan und niedermolekularen Organo(poly)siloxan.

Die erfindungsgemäßen, wäßrigen Emulsionen von bei Raumtemperatur festen hochmolekularen Organopolysiloxanen werden dadurch hergestellt, daß das bei Raumtemperatur feste hochmolekulare Organopolysiloxan zunächst in dem flüssigen niedermolekularen Organo(poly)siloxan gelöst und diese Lösung mit Wasser unter Zusatz von Emulgator emulgiert wird. Dabei kann der Emulgator, seiner chemischen Beschaffenheit entsprechend, sowohl in der Wasserphase, als auch in der Ölphase vorgelegt werden. Das Lösen des hochmolekularen Organopolysiloxans in dem niedermolekularen Organo(poly)siloxan wie der Emulgierschritt kann in üblichen, zur Herstellung von Emulsionen geeigneten Mischgeräten, wie schnellaufenden Stator-Rotor-Rührgeräten nach Prof. P. Willems, wie sie unter dem registrierten Warenzeichen "Ultra-Turrax" bekannt sind, erfolgen. Nach dem Emulgierschritt kann die Emulsion in gewünschter Weise mit Wasser verdünnt werden.

Die nach dem erfindungsgemäßen Verfahren hergestellten, wäßrigen Emulsionen von hochmolekularen Organopolysiloxanen besitzen einen Festgehalt von vorzugsweise 1-80 Gew.-%, insbesondere 30-60 Gew.-%, besonders bevorzugt 45 bis 55 Gew.-%, jeweils bezogen auf das Gesamtgewicht der jeweiligen Emulsion.

Des weiteren können gegebenenfalls übliche Additive zugesetzt werden, ausgewählt aus der Gruppe der Katalysatoren, wie vorzugsweise Metallsalze, Thixotropiermittel, Pigmente, Säuren bzw. Basen und Konservierungsmittel. Die Zusatzmenge richtet sich nach dem jeweiligen Einsatzzweck der Emulsion sowie nach den erforderlichen Eigenschaften. Die Art der Zugabe der Additive ist variierbar und richtet sich nach deren chemischen Beschaffenheit. So können beispielsweise wasserlösliche Stoffe der Wasserphase und wasserunlösliche Stoffe der Ölphase zugesetzt werden. Außerdem können Zusätze auch zu der bereits gebildeten Emulsion gegeben werden, wobei die Zusätze die gebildete Emulsion nicht zerstören dürfen.

Die nach dem erfindungsgemäßen Verfahren hergestellten Emulsionen von bei Raumtemperatur festen hochmolekularen Organopolysiloxanen weisen eine überraschend hohe Lagerstabilität von mehr als sechs Monaten bei Raumtemperatur auf, obwohl sich, wie dem Fachmann bekannt ist, wäßrige Emulsionen von niedermolekularen Organo(poly)siloxanen durch eine sehr geringe Lagerstabilität ausweisen, d.h. innerhalb weniger Tage zu Ausfällungen neigen.

Das erfindungsgemäße Verfahren eignet sich zur Herstellung beliebiger lösungsmittelfreier Emulsionen von bei Raumtemperatur festen hochmolekularen Organopolysiloxanen, die für die verschiedensten Zwecke eingesetzt werden können, vor allem dann, wenn die Abwesenheit organischer Lösungsmittel erforderlich ist. Solche wäßrigen Emulsionen eignen sich beispielsweise besonders als Bindemittel für wäßrige Anstriche, als Grundiermittel auf mineralischen Unterlagen, als Zusätze zu organischen Dispersionen, als Hydrophobier-und Bindemittel in Fasermaterialien etc., wobei je nach Verwendungszweck der Zusatz verschiedener Additive möglich bzw. notwendig ist.

In den folgenden Beispielen beziehen sich alle Angaben von Teilen und Prozentsätzen, soweit nichts anderes angegeben ist, auf das Gewicht.

In den chemischen Formeln werden folgende Abkürzungen verwendet:
Me : -CH₃
Et : -C₂H₅

### Beispiel 1

70 Teile eines bei Raumtemperatur festen Organopolysiloxans der Summenformel

MeSiO_{1,48}(OEt)_{0,04} (Siloxan A)

(käuflich erwerblich unter dem Namen "Festharz MK" bei der Wacker-Chemie GmbH, München) werden in 30 Teilen eines Organo(poly)siloxans der Summenformel

MeSiO_{1,1}(OEt)_{0,8} (Siloxan B)

mit einer Viskosität von 25 mPa·s bei 25 °C (käuflich erwerblich unter dem Namen "Trasil" bei der Wacker-Chemie GmbH, München) mit Hilfe von Ultraschall-Bestrahlung gelöst. Die resultierende Mischung besitzt bei 25 °C eine Viskosität von ca. 180 Pa·s.

Zu 150 g dieser Organopolysiloxanlösung werden 9 g eines unter dem Handelsnamen "Arlypon IT 16" bei der Firma Grünau, Illertissen, erhältlichen, nichtionogenen Emulgators auf Polyethylenglykolbasis (Isotridecylalkohol-polyethylenoxid-ether mit im Mittel 16 Polyethylenoxid-Einheiten) gegeben und verrührt. Diese Mischung wird dann mit Hilfe eines Emulgiergeräts, wie z. B. einem "Ultra-Turrax", emulgiert, indem unter ständigem Rühren 141 g entionisiertes Wasser zugegeben werden. Es wird eine wäßrige Emulsion von hochmolekularem Organopolysiloxan mit einem Festgehalt von 51 Gew.-%, bezogen auf das Gesamtgewicht an Emulsion, erhalten.

Die hergestellte Emulsion zeigt bei einstündigem Zentrifugieren (Drehzahl: 4000 U·min⁻¹) keine Sedimentationserscheinungen. Sie ist bei Raumtemperatur länger als sechs Monate stabil.

### Beispiel 2

Die in Beispiel 1 beschriebene Arbeitsweise wird wiederholt mit der Abänderung, daß als Emulgator 60 g einer 10 %igen wäßrigen Lösung eines Polyvinylalkohols mit dem Handelsnamen "Polyviol® W 25/140" der Wacker-Chemie GmbH, München verwendet wird und mit 90 g entionisiertem Wasser emulgiert wird. Es wird eine wäßrige Emulsion von hochmolekularem Organopolysiloxan mit einem Festgehalt von 52 Gew.-%, bezogen auf das Gesamtgewicht an Emulsion, erhalten.

Die hergestellte Emulsion zeigt bei einstündigem Zentrifugieren (Drehzahl: 4000 U·min⁻¹) keine Sedimentationserscheinungen. Sie ist bei Raumtemperatur länger als sechs Monate stabil.

### Beispiel 3

Die in Beispiel 1 beschriebene Arbeitsweise wird wiederholt mit der Abänderung, daß das bei Raumtemperatur feste hochmolekulare Organopolysiloxan (Siloxan A) und das bei Raumtemperatur flüssige Organo(poly)siloxan (Siloxan B) in einem Gewichtsverhältnis von 1:1 Teilen eingesetzt wird. Es wird eine wäßrige Emulsion von hochmolekularem Organopolysiloxan mit einem Festgehalt von 52 Gew.-%, bezogen auf das Gesamtgewicht an Emulsion, erhalten.

Die hergestellte Emulsion zeigt bei einstündigem Zentrifugieren (Drehzahl: 4000 U·min⁻¹) keine Sedimentationserscheinungen. Sie ist bei Raumtemperatur länger als sechs Monate stabil.

### Beispiel 4

Als Emulgator wird ein ionischer Emulgator verwendet, der wie folgt hergestellt wird:

In einem mit Rührer, Tropftrichter und Rückflußkühler ausgestatteten 1-1-Dreihalskolben werden unter Rühren zu einem Gemisch aus 0,2 g KOH in 4 g Methanol und 500 g des in Beispiel 1 beschriebenen Siloxans B 150 g N-(2-Aminoethyl)-3-aminopropyltrimethoxysilan (erhältlich unter dem Handelsnamen "Silan GF 91" bei der Wacker-Chemie GmbH, München) gegeben. Das Gemisch wird sechs Stunden unter Rückfluß zum Sieden erhitzt, dann auf 30 °C abgekühlt, mit 2,5 ml 10 %-iger wäßriger Salzsäure vermischt, durch Erwärmen bis auf 140 °C von flüchtigen Bestandteilen befreit und filtriert. 53,3 g des so erhaltenen Siloxans werden mit 6,7 g Eisessig vermischt.

45 g der oben beschriebenen Siloxan/Eisessig-Mischung werden zu 105 g der in Beispiel 1 beschriebenen Siloxan-Mischung mit der Viskosität von ca. 180 Pa·s bei 25 °C gegeben. Diese Mischung wird dann gemäß der in Beispiel 1 beschriebenen Arbeitsweise mit insgesamt 150 g entionisiertem Wasser emulgiert. Es wird eine wäßrige Emulsion von hochmolekularem Organopolysiloxan mit einem Festgehalt von 49 Gew.-%, bezogen auf das Gesamtgewicht an Emulsion, erhalten.

Die hergestellte Emulsion zeigt bei einstündigem Zentrifugieren (Drehzahl: 4000 U·min⁻¹) keine Sedimentationserscheinungen. Sie ist bei Raumtemperatur länger als sechs Monate stabil.

### Beispiel 5

Die in Beispiel 4 beschriebene Arbeitsweise wird wiederholt mit der Abänderung, daß anstelle der in Beispiel 1 beschriebenen Siloxan-Mischung mit der Viskosität von ca. 180 Pa·s eine Mischung verwendet wird, die dadurch hergestellt wird, daß 70 Teile des bei Raumtemperatur festen hochmolekularen Organopolysiloxans (Siloxan A) aus Beispiel 1 in 30 Teilen eines Organo(poly)siloxans der Summenformel

MeSiO_{1,1}(OMe)_{0,8} (Siloxan C)

(erhältlich unter dem Handelsnamen "VP 2265" bei der Wacker-Chemie GmbH, München) gelöst werden. Es wird eine wäßrige Emulsion von hochmolekularem Organopolysiloxan mit einem Festgehalt von 50 Gew.-%, bezogen auf das Gesamtgewicht an Emulsion, erhalten.

Die hergestellte Emulsion zeigt bei einstündigem Zentrifugieren (Drehzahl: 4000 U·min⁻¹) keine Sedimentationserscheinungen. Sie ist bei Raumtemperatur länger als sechs Monate stabil.

### Beispiel 6

Die in Beispiel 1 beschriebene Arbeitsweise wird wiederholt mit der Abänderung, daß anstelle des in Beispiel 1 verwendeten Organo(poly)siloxans B ein Organo(poly)siloxan der Summenformel

SiO_{0,85}(OEt)_{2,3} (Siloxan D)

mit einer Viskosität von 4 mPa·s bei 25 °C (erhältlich unter dem Handelsnamen "Silikat TES 40" bei der Wacker-Chemie GmbH, München) verwendet wird. Es wird eine wäßrige Emulsion von hochmolekularem Organopolysiloxan mit einem Festgehalt von 51 Gew.-%, bezogen auf das Gesamtgewicht an Emulsion, erhalten.

Die hergestellte Emulsion zeigt bei einstündigem Zentrifugieren (Drehzahl: 4000 U·min⁻¹) keine Sedimentationserscheinungen. Sie ist bei Raumtemperatur länger als sechs Monate stabil.

### Beispiel 7

70 Teile des in Beispiel 1 beschriebenen bei Raumtemperatur festen Organopolysiloxans (Siloxan A) werden in 30 Teilen eines Silans der Summenformel

MeSi(OEt)₃ (Silan E)

mit einer Viskosität von 0,6 mP·as bei 25 °C (erhältlich unter dem Handelsnamen "Silan M1-Triethoxy" bei der Wacker-Chemie GmbH, München) gelöst. Zum Lösen kann dabei Ultraschall-Bestrahlung oder ein geeigneter Mischer benützt werden.

In 150 g dieser Organopolysiloxanlösung werden 60 g einer 10 %igen wäßrigen Lösung eines Polyvinylalkohols (Handelsname "Polyviol® W 25/140" der Wacker-Chemie GmbH, München) dispergiert. Diese Mischung wird dann mit Hilfe eines Emulgiergeräts, wie z.B. einem "Ultra-Turrax", emulgiert, indem unter ständigem Rühren 90 g entionisiertes Wasser zugegeben werden. Es wird eine wäßrige Emulsion von hochmolekularem Organopolysiloxan mit einem Festgehalt von 52 Gew.-%, bezogen auf das Gesamtgewicht an Emulsion, erhalten.

Die hergestellte Emulsion zeigt bei einstündigem Zentrifugieren (Drehzahl: 4000 U·min⁻¹) keine Sedimentationserscheinungen. Sie ist bei Raumtemperatur mindestens drei Monate stabil.

## Patentansprüche

1. Verfahren zur Herstellung wäßriger Emulsionen von bei Raumtemperatur festen hochmolekularen Organopolysiloxanen, dadurch gekennzeichnet, daß das bei Raumtemperatur feste hochmolekulare Organopolysiloxan in einem bei Raumtemperatur flüssigen niedermolekularen Organo(poly)siloxan gelöst und diese Lösung mit Wasser unter Zusatz eines Emulgators und gegebenenfalls üblichen Additiven emulgiert wird.

2. Verfahren nach Anspruch 1 dadurch gekennzeichnet, daß als hochmolekulares Organopolysiloxan solches aus Einheiten der Formel 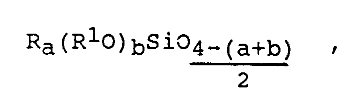 wobei R gleiche oder verschiedene, einwertige Kohlenwasserstoffreste mit 1 bis 14 Kohlenstoffatom(en) je Rest, die gegen Wasser inerte Substituenten aufweisen können, bedeutet, R¹ gleich oder verschieden sein kann, ein Wasserstoffatom oder einen Alkylrest mit 1 bis 4 Kohlenstoffatom(en) je Rest bedeutet, a 0, 1, 2 oder 3, durchschnittlich 0,75 bis 1,5, und b 0, 1, 2 oder 3, durchschnittlich 0,0 bis 1,1, ist, mit der Maßgabe, daß diese Organopolysiloxane ein Molekulargewicht von mindestens 4000 g/mol besitzen.

3. Verfahren nach Anspruch 1 oder 2, dadurch gekennzeichnet, daß als niedermolekulares Organo(poly)siloxan solches aus Einheiten der Formel 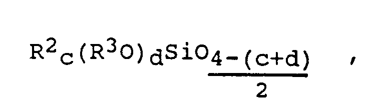 wobei R² gleiche oder verschiedene, einwertige Kohlenwasserstoffreste mit 1 bis 14 Kohlenstoffatom(en) je Rest, die gegen Wasser inerte Substituenten aufweisen können, bedeutet, R³ gleich oder verschieden sein kann, ein Wasserstoffatom oder einen Alkylrest mit 1 bis 4 Kohlenstoffatom(en) je Rest bedeutet, c 0, 1, 2 oder 3, durchschnittlich 0,0 bis 3,9, und d 0, 1, 2 oder 3, durchschnittlich 0,2 bis 3,9, ist, mit der Maßgabe, daß diese Organo(poly)siloxane 1 bis 20 Si-Atome pro Molekül und eine Viskosität von 0,5 bis 100 mPa·s bei 25 °C besitzen.

4. Verfahren nach einem der Ansprüche 1 bis 3, dadurch gekennzeichnet, daß niedermolekulares Organo(poly)siloxan in Mengen von 1-200 Gew.-%, bezogen auf das Gesamtgewicht an jeweils eingesetztem, hochmolekularen Organopolysiloxan, eingesetzt wird.

5. Verfahren nach einem der Ansprüche 1 bis 4, dadurch gekennzeichnet, daß Emulgator in Mengen von 0,1-50 Gew.-%, bezogen auf das Gesamtgewicht an eingesetztem, hochmolekularen Organopolysiloxan und niedermolekularen Organo(poly)siloxan, eingesetzt wird.

6. Verfahren nach einem der Ansprüche 1 bis 5, dadurch gekennzeichnet, daß die wäßrige Emulsion einen Festgehalt von 1-80 Gew.-%, bezogen auf das Gesamtgewicht der Emulsion, besitzt.

7. Verfahren nach einem der Ansprüche 1 bis 6, dadurch gekennzeichnet, daß die wäßrige Emulsion als übliche Additive solche, ausgewählt aus der Gruppe der Katalysatoren, Thixotropiermittel, Pigmente, Säuren bzw. Basen und Konservierungsmittel, enthält.

## Claims

1. Process for the preparation of an aqueous emulsion of a high-molecular-weight organopolysiloxane which is solid at room temperature, characterized in that the high-molecular-weight organopolysiloxane which is solid at room temperature is dissolved in a low-molecular-weight organo(poly)siloxane which is liquid at room temperature, and this solution is emulsified with water with addition of an emulsifier and, if appropriate, customary additives.

2. Process according to Claim 1, characterized in that the high-molecular-weight organopolysiloxane is one comprising units of the formula 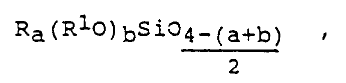 where R denotes identical or different monovalent hydrocarbon radicals having 1 to 14 carbon atom(s) per radical which can have substituents which are inert toward water, R¹ may be identical or different and denote a hydrogen atom or an alkyl radical having 1 to 4 carbon atom(s) per radical, a is 0, 1, 2 or 3, on average 0.75 to 1.5, and b is 0, 1, 2 or 3, on average 0.0 to 1.1, with the proviso that this organopolysiloxane has a molecular weight of at least 4,000 g/mol.

3. Process according to Claim 1 or 2, characterized in that the low-molecular-weight organo(poly)siloxane is one comprising units of the formula 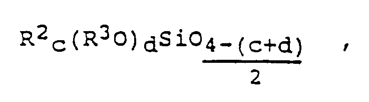 where R² denotes identical or different monovalent hydrocarbon radicals having 1 to 14 carbon atom(s) per radical which can have substituents which are inert toward water, R³ may be identical or different and denote a hydrogen atom or an alkyl radical having 1 to 4 carbon atom(s) per radical, c is 0, 1, 2 or 3, on average 0.0 to 3.9, and d is 0, 1, 2 or 3, on average 0.2 to 3.9, with the proviso that this organo(poly)siloxane contains 1 to 20 Si atoms per molecule and has a viscosity of from 0.5 to 100 mPa.s at 25°C.

4. Process according to any of Claims 1 to 3, characterized in that the low-molecular-weight organo(poly)siloxane is employed in amounts of 1-200% by weight, in each case relative to the total weight of the high-molecular-weight organopolysiloxane employed.

5. Process according to any of Claims 1 to 4, characterized in that the emulsifier is employed in amounts of 0.1-50% by weight, relative to the total weight of the high-molecular-weight organopolysiloxane and low-molecular-weight organo(poly)siloxane employed.

6. Process according to any of Claims 1 to 5, characterized in that the aqueous emulsion has a solids content of 1-80% by weight, relative to the total weight of the emulsion.

7. Process according to any of Claims 1 to 6, characterized in that the aqueous emulsion contains, as customary additives, those selected from the group comprising catalysts, thixotropic agents, pigments, acids or bases and preservatives.

## Revendications

1. Procédé de préparation d'émulsions aqueuses d'organopolysiloxanes à haut poids moléculaire solides à température ambiante, caractérisé en ce qu'on dissout l'organopolysiloxane à haut poids moléculaire solide à température ambiante dans un organo(poly)siloxane à bas poids moléculaire liquide à température ambiante et on émulsionne cette solution avec de l'eau en ajoutant un émulsionnant et, le cas échéant, des additifs usuels.

2. Procédé selon la revendication 1, caractérisé en ce que l'organopolysiloxane à haut poids moléculaire est composé d'unités répondant à la formule 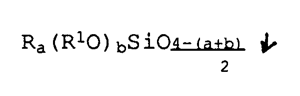 où R signifie des radicaux hydrocarbonés monovalents, identiques ou différents, comportant de 1 à 14 atome(s) de carbone par radical, qui peuvent comporter des substituants inertes à l'eau, R¹, qui peut être identique ou différent, signifie un atome d'hydrogène ou un radical alkyle comportant de 1 à 4 atome(s) de carbone par radical, a est 0, 1, 2 ou 3, en moyenne de 0,75 à 1,5 et b est 0, 1, 2 ou 3, en moyenne de 0,0 à 1,1 à condition que ces organopolysiloxanes aient un poids moléculaire d'au moins 4000 g/mol.

3. Procédé selon la revendication 1 ou 2, caractérisé en ce que l'organo(poly)siloxane à bas poids moléculaire est composé d'unités répondant à la formule 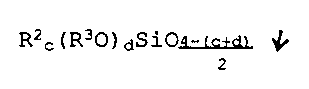 où R² signifie des radicaux hydrocarbonés monovalents, identiques ou différents, comportant de 1 à 14 atome(s) de carbone par radical qui peuvent comporter des substituants inertes à l'eau, R³, qui peut être identique ou différent, signifie un atome d'hydrogène ou un radical alkyle comportant de 1 à 4 atome(s) de carbone par radical, c est 0, 1, 2 ou 3, en moyenne de 0,0 à 3,9 et d est 0, 1, 2 ou 3, en moyenne de 0,2 à 3,9, à condition que ces organo(poly)siloxanes comportent de 1 à 20 atomes de Si par molécule et aient une viscosité de 0,5 à 100 mPa.s à 25°C.

4. Procédé selon l'une des revendications 1 à 3, caractérisé en ce qu'on utilise de l'organo(poly)siloxane à bas poids moléculaire en quantités de 1 à 200 % en poids par rapport au poids total d'organopolysiloxane à haut poids moléculaire utilisé chaque fois.

5. Procédé selon l'une des revendications 1 à 4, caractérisé en ce qu'on utilise de l'émulsionnant en quantités de 0,1 à 50% en poids par rapport au poids total d'organopolysiloxane à haut poids moléculaire et d'organo(poly)siloxane à bas poids moléculaire utilisés.

6. Procédé selon l'une des revendications 1 à 5, caractérisé en ce que l'émulsion aqueuse a une teneur en matière solide de 1 à 80% en poids par rapport au poids total de l'émulsion.

7. Procédé selon l'une des revendications 1 à 6, caractérisé en ce que l'émulsion aqueuse contient comme additifs usuels, des additifs, choisis parmi le groupe des catalyseurs, des agents thixotropes, des pigments, des acides ou bien des bases, et des agents conservateurs.
